# EUROPÄISCHE PATENTSCHRIFT

(11) **EP 0 469 325 B1**
(45) Veröffentlichungstag und Bekanntmachung des Hinweises auf die Patenterteilung: **01.03.1995**
(21) Anmeldenummer: 91111092.2
(22) Anmeldetag: 04.07.1991
(51) Int. Cl.: B29D 31/02, F16C 33/20

(54) **Verfahren zum Herstellen einer Gleitfläche an einer aus Kunststoff bestehenden Führungsbüchse für eine höhenverstellbare Stuhlsäule**
Method of manufacturing sliding faces on a plastic guide bushing for a height adjustable chair's column unit
Procédé de fabrication de surfaces de glissement dans une douille de guidage en plastique pour colonne télescopique de chaise

(30) Priorität: 01.08.1990 DE 4024392
(43) Veröffentlichungstag der Anmeldung: 05.02.1992
(73) Patentinhaber: SUSPA COMPART Aktiengesellschaft, D-90518 Altdorf (DE)
(72) Erfinder: Bauer, Hans Jürgen, W-8503 Altdorf (DE)
(74) Vertreter: Rau, Manfred, Dr. Dipl.-Ing.

(56) Entgegenhaltungen:
- GB-A- 2 189 557
- US-A- 2 324 083
- US-A- 4 899 969
- US-A- 4 916 749
- PATENT ABSTRACTS OF JAPAN vol. 8, no. 76 (M-288)(1513) 9.April 1984 & JP-A-58 221 018 ( TOYOTA JIDOSHA KOGYO K.K. )

## Beschreibung

Die Erfindung betrifft ein Verfahren nach dem Oberbegriff des Anspruches 1.

Ein Grundproblem bei der Herstellung von Gleitflächen an derartigen aus der DE 19 31 012 C3 bekannten Führungsbüchsen liegt darin, daß die Innenfläche der Führungsbüchse beim Spritzen mit Untermaß gegenüber dem Gehäuse der Gasfeder ausgebildet wird. Die Gleitbüchse wird dann ausgerieben, um auf das gewünschte Maß zu kommen. Die Erfahrung zeigt, daß die Genauigkeit hierbei oft unbefriedigend sind, was wiederum zu nicht befriedigenden Führungs- und Gleiteigenschaften zwischen dem Gehäuse der Gasfeder und der Führungsbüchse führt. Da die bei Stühlen auf deren Stuhlsäulen ausgeübten Querkräfte relativ groß sind, wirken sich Fertigungsungenauigkeiten und zu große Toleranz nachteilig auf das Führungs- und Gleitverhalten aus.

Aus der US-A-2 324 083 ist ein Verfahren zur Herstellung einer Gleitlagerbüchse bekannt, bei der auf ebenen Metallplatten nebeneinander Stege aus gummiähnlichem Material unter Freilassung von Nuten angebracht werden. Anschließend werden die Platten samt den stegen zu einer Büchse zusammengerollt, wobei die Nuten zwischen den Stegen erhalten bleiben. Diese Nuten dienen zur Aufnahme von Schnmiermitteln. An den Stegen werden Gleitflächen durch Schleifen hergestellt.

Der Erfindung liegt die Aufgabe zugrunde, ein Verfahren der gattungsgemäßen Art zu schaffen, mittels dessen zum einen eine hohe Maßgenauigkeit der Gleitfläche gegenüber dem Gehäuse der Gasfeder und zum anderen eine hohe Oberflächenqualität, d.h. geringe Oberflächenrauhigkeit erreichbar, ist.

Diese Aufgabe wird erfindungsgemäß durch die Merkmale im Kennzeichnungsteil des Anspruches 1 gelöst. Mit Räumen als spanabhebender Bearbeitung sind außerordentlich hohe Genauigkeiten erreichbar und zwar in einem zeitlich sehr kurzen Bearbeitungsvorgang, weil beim Räumen ein einziger Durchzug einer mit zahlreichen Schneiden versehenen Räumnadel zur vollständigen Herstellung der gewünschten Fläche ausreicht. Andererseits wird durch die Ausgestaltung der zu bearbeitenden Innenfläche erreicht, daß nur jeweils zwischen zwei benachbarten Rücksprüngen ein Span geschnitten wird. Hierdurch wird vermieden, daß ein rundum über den gesamten Umfang der Innenfläche geschnittener einheitlicher Span zu Pressungen und damit Beschädigungen der Oberfläche bzw. Innenfläche der Gleitbüchse führt. Die durch die erfindungsgemäßen Maßnahmen geschnittenen Teil-Zylinder-Flächen, die in ihrer Gesamtheit die Gleitfläche ergeben, werden daher mit extrem hoher Oberflächenqualität und Maßgenauigkeit geräumt.

Die auch nach dem Räumen verbleibenden Rücksprünge, die die Form von Nuten unterschiedlichen bzw. beliebigen Querschnitts haben können, können als Schmierfett-Kammern verwendet werden, wodurch noch ein zusätzlicher Effekt erreicht wird.

Weitere Vorteile, Merkmale und Einzelheiten der Erfindung ergeben sich aus der nachfolgenden Beschreibung eines Ausführungsbeispiels anhand der Zeichnung. Es zeigt
- Fig. 1: einen Teilauschnitt aus einer höhenverstellbaren Stuhläule mit Führungsrohr, Führungsbüchse und Gehäuse einer Gasfeder,
- Fig. 2: die Führungsbüchse vor der Bearbeitung der Innenfläche im Längsschnitt,
- Fig. 3: eine Draufsicht auf Fig.2 und
- Fig. 4: einen Teil-Querschnitt durch die Führungsbüchse nach der spanabhebenden Bearbeitung.

Eine Führungsbüchse 1 ist in einem nur angedeuteten Führungsrohr 2 einer höhenverstellbaren Stuhlsäule angeordnet. Derartige Stuhlsäulen sind beispielsweise aus der EP 0 325 726 A1 (entspr. US-Patent 4 899 969) bekannt.

Die Führungsbüchse 1 weist eine Gleitbüchse 3 auf an deren Außenseite radial zur Mittel-Längs-Achse 4 nach außen vorspringende Rippen-Stege 5 angeformt sind. Mit diesen Rippen-Stegen 5 stützt sich die Führungsbüchse 1 radial gegen die Innenwand 6 des Führungsrohres 2 ab. Ein oberer Ringbund 7 legt die Führungsbüchse 1 in axialer Richtung gegenüber dem Führungsrohr 2 fest. Im übrigen ist die Führungsbüchse 1 mit Preßsitz in das Führungsrohr 2 eingeschoben.

An der Innenfläche 8 der Gleitbüchse 3 ist ein Gehäuse 9 einer nur angedeuteten Gasfeder 10 in Richtung der Achse 4 verschiebbar geführt. Diese Gasfeder 10 bildet zusammen mit dem Führungsrohr 2 und der Führungsbüchse 1 im wesentlichen die angesprochene höhenverstellbare Stuhlsäule. Das Gehäuse 9 der Gasfeder 10 kann deren unmittelbares Gehäuse sein, oder ein zusätzliches, die Gasfeder 10 umgebendes Tragrohr, wie es ebenfalls aus der EP 0 325 726 A1 (entspr. der US-PS 4 899 969) bekannt ist.

Die Führungsbüchse 1 besteht aus Kunststoff, und zwar bevorzugt aus einem Polyacetal, und ist einstückig durch Spritzgießen hergestellt. Die Innenfläche 8 weist nach dem Spritzen Untermaß gegenüber dem kreiszylindrischen Gehäuse 9 der Gasfeder 10 auf; dieses Untermaß ist notwendig, damit die Gleitbüchse 3 der Führungsbüchse 1 in einem spanabhebenden Bearbeitungsvorgang mit einer sehr genau kalibrierten als Führungsfläche für das Gehäuse 9 dienenden Innenfläche 8 versehen werden kann.

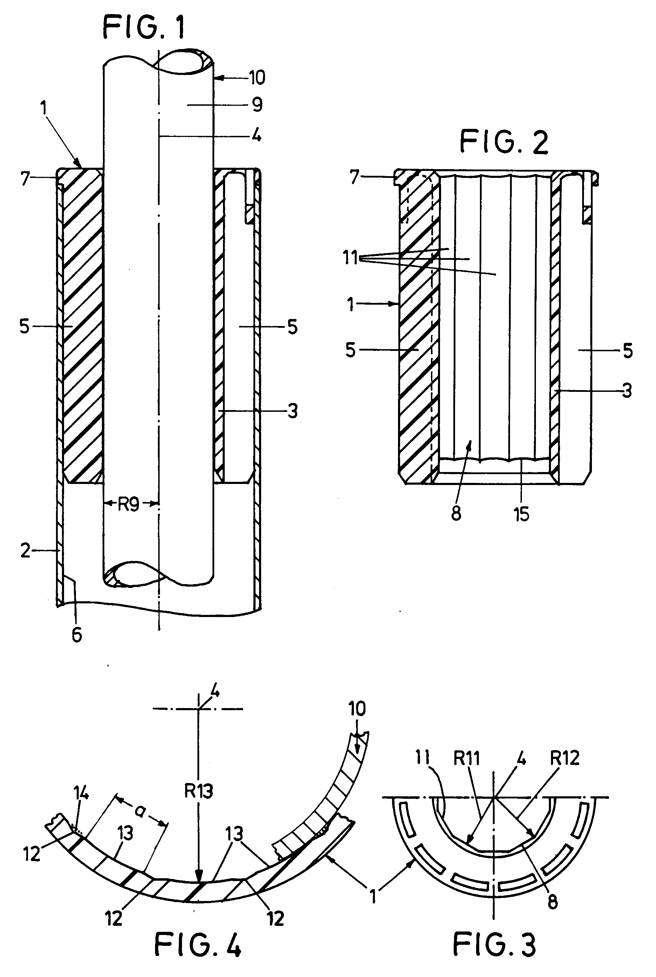

Wie aus den Fig. 2 und 3 hervorgeht, ist die Innenfläche 8 der Führungsbüchse 1 vor dem erwähnten Bearbeitungsvorgang polygonal ausgebildet, und zwar in Form eines regelmäßigen Polygons dessen Mittelachse auch durch die Achse 4 gebildet wird. Beispielsweise ist es in Form eines regelmäßigen 12-Ecks ausgebildet. Es wird also durch Flächen 11 gebildet, deren Ecken - bezogen auf die Achse 4 - Rücksprünge 12 bilden. Der Abstand R12 eines jeden Rücksprungs 12 von der Achse 4 ist demnach größer als der kleinste Abstand R11 der Flächen 11 von der Achse 4, wobei dieser kleinste Abstand R11 jeweils in der Mitte zwischen zwei Ecken bzw. Rücksprüngen 12 liegt. Im Vergleich zum Radius R9 des zylindrischen Gehäuses gilt R12 > R9 > R11.

Die in der vorstehend geschilderten Weise ausgestaltete Innenfläche 8 der Gleitbüchse 3 wird im Rahmen der spanabhebenden Kalibrierung in einem Räumverfahren, also mit einer Räumnadel, die sich über den ganzen Umfang erstreckende Räumzähne mit kreisförmiger Schneide aufweist, geräumt. Hierbei werden - wie in der Teildarstellung gemäß Fig. 4 stark vergrößert dargestellt ist - in die Flächen 11 symmetrisch zur Achse 4 angeordnete Teil-Zylinder-Flächen 13 mit einem Radius R13 geräumt, wobei die Beziehung gilt R12 > R13 ≧ R9, wobei R 13 höchstens um wenige hundertstel Millimeter, beispielsweise bis zu 5 hundertstel Millimeter größer ist als R9. Bei diesem Räumprozeß werden von den Flächen 11 Teilbereiche abgetragen, wobei diese durch die Teil-Zylinder-Flächen 13 gebildeten Teilbereiche jeweils durch den dazwischen liegenden Rücksprung 12 voneinander getrennt sind. Die aus der jeweiligen Fläche 11 geräumten Späne haben daher maximal eine Breite, die maximal der Breite a der entsprechenden Teil-Zylinder-Fläche 13 entspricht. Die aus benachbarten Flächen 11 geräumten Späne sind im Bereich des zwischen ihnen liegenden Rücksprungs 12 unterbrochen. Diese Art des Räumens der Teil-Zylinder-Flächen 13 führt dazu, daß diese sehr glatt mit hoher Oberflächenqualität geräumt werden, weil die beim Räumen anfallenden Kunststoffspäne gut ablaufen können. Es besteht keine Gefahr, daß sie sich zwischen den Schneidzähnen des Räumwerkzeugs und der Innenfläche 8 der Gleitbüchse 3 festsetzen und deren Oberfläche beschädigen. Die Summe der Teil-ZylinderFlächen 13 bildet die eigentliche Führungsfläche der Gleitbüchse 3 gegenüber dem Gehäuse 9 der Gasfeder 10.

Die verbleibenden nutartigen Rücksprünge 12 können als Schmiernuten, d.h. als Vorratsräume für Schmierfett 14, verwendet werden. Dies ist insbesondere in einfacher Weise möglich, wenn im unteren, dem Ringbund 7 abgewandten Bereich der Gleitbüchse 3 ein nach innen vorspringender Rand 15 ausgeformt ist, dessen Innendurchmesser nach dem Räumen ebenfalls R13 beträgt. Dieser Rand 15 schließt die als Schmiernuten oder -taschen dienenden Rücksprünge 12 nach unten ab, so daß das Schmierfett 14 nicht nach unten austreten kann.

## Patentansprüche

1. Verfahren zum Herstellen einer Gleitfläche in einer durch Spritzgießen einstückig aus Kunststoff erzeugten Führungsbüchse einer höhenverstellbaren Stuhlsaule, die ein Führungsrohr (2) mit der Führungsbüchse (1) und eine in deren Gleitfläche (13) mit einem kreiszylindrischen Gehäuse (9) geführte Gasfeder (10) aufweist, durch spanabhebende Bearbeitung einer Innenfläche (8) der Führungsbüchse (1) deren Abstand (R11) von einer gemeinsamen Mittel-Längs-Achse (4) vor der Bearbeitung kleiner ist als der Radius (R9) des Gehäuses (9) und deren Abstand (R13) von der Mittel-Längs-Achse (4) nach der Bearbeitung gleich oder geringfügig größer ist als der Radius (R9) des Gehäuses (9), dadurch gekennzeichnet, daß die Innenfläche (8) beim Spritzgießen mit Rücksprüngen (12) versehen wird, deren Abstand (R12) von der Mittel-Längs-Achse (4) größer ist als der Abstand der Gleitfläche (13) von der Mittel-Längs-Achse (4) und daß die spanabhebende Bearbeitung durch Räumen erfolgt.

2. Verfahren nach Anspruch 1, dadurch gekennzeichnet, daß zum Räumen eine Räumnadel mit kreisringförmigen Schneiden eingesetzt werden.

3. Verfahren nach Anspruch 1, dadurch gekennzeichnet, daß die Innenfläche (8) vor der spanabhebenden Bearbeitung im Querschnitt einem Polygonzug entspricht.

4. Verfahren nach Anspruch 3, dadurch gekennzeichnet, daß die Innenfläche (8) vor der spanabhebenden Bearbeitung den Querschnitt eines regelmäßigen, zur Mittel-Längs-Achse (4) symmetrischen Viel-Ecks aufweist.

5. Verfahren nach einem der Ansprüche 1 bis 4, dadurch gekennzeichnet, daß zwischen den Rücksprüngen (12) Teil-Zylinder-Flächen (13) geräumt werden, die kreissymmetrisch zur Mittel-Längs-Achse (4) angeordnet sind.

6. Verfahren nach einem der Ansprüche 1 bis 5, dadurch gekennzeichnet, daß die Rücksprünge (12) als Vorratskammern für Schmierfett (14) verwendet werden.

7. Verfahren nach Anspruch 6, dadurch gekennzeichnet, daß die Rücksprünge (12) zumindest an einem Ende der Gleitfläche (13) abgeschlossen sind.

## Claims

1. Method for the production of an internal slide surface on a guide sleeve injection-molded in one piece from plastic material of a length-adjustable chair column, which has a guide tube (2) with the guide sleeve (1) and a gas spring (10) guided in the latter's slide surface (13) with an annular cylindrical housing (9), by chip removing processing of an internal surface (8) of the guide sleeve (1), of which the distance (R11) from a common central longitudinal axis (4), prior to the processing, is smaller than the radius (R9) of the housing (9) and of which the distance (R13) from the central longitudinal axis (4), after the processing, equals or slightly exceeds the radius (R9) of the housing (9), characterized in that the internal surface (8) is provided with recesses (12) during the injection-moulding operation, of which the distance (R12) from the central longitudinal axis (4) is greater than the distance of the slide surface (13) from the central longitudinal axis (4) and in that the chip removing processing takes place by broaching.

2. Method according to claim 1, characterized in that a broach with circular blades is used for broaching.

3. Method according to claim 1, characterized in that the internal surface (8) corresponds in cross-section to a polygon prior to the chip removing processing.

4. Method according to claim 3, characterized in that the internal surface (8) has the cross-section of a regular polygon symmetric to the central longitudinal axis (4) prior to the chip removing processing.

5. Method according to one of the claims 1 to 4, characterized in that partial cylinder surfaces (13) are broached between the recesses (12), which surfaces (13) are arranged in circular symmetry relative to the central longitudinal axis (4).

6. Method according to one of the claims 1 to 5, characterized in that the recesses (12) are used as storage chambers for a lubricant (14).

7. Method according to claim 6, characterized in that the recesses (12) are sealed off at least at one end of the slide surface (13).

## Revendications

1. Procédé destiné à réaliser une surface de glissement dans une douille de guidage fabriquée d'un seul tenant en matière plastique moulée par injection, et destinée à un fût de chaise réglable en hauteur, qui comprend un tube de guidage (2) comportant la douille de guidage (1), dans la surface de glissement (13) de laquelle est guidé un ressort à gaz (10) par son carter cylindrique circulaire (9), la réalisation de la surface de glissement étant effectuée par un usinage par enlèvement de copeaux, d'une surface intérieure (8) de la douille de guidage (1), dont la distance (R11) à un axe central longitudinal commun (4), est inférieure, avant l'usinage, au rayon (R9) du carter (9), et dont la distance (R13) à l'axe longitudinal central (4), après l'usinage, est égale ou légèrement supérieure au rayon (R9) du carter (9), caractérisé en ce que la surface intérieure (8), lors du moulage par injection, est munie de retraits (12) dont la distance (R12) à l'axe central longitudinal (4) est supérieure à la distance de la surface de glissement (13) à l'axe longitudinal central (4), et en ce que l'usinage par enlèvement de copeaux s'effectue par brochage.

2. Procédé selon la revendication 1, caractérisé en ce que pour le brochage on met en oeuvre un outil de brochage à dents à tranchant de coupe de forme annulaire circulaire.

3. Procédé selon la revendication 1, caractérisé en ce que la surface intérieure (8) présente, avant l'usinage par enlèvement de copeaux, une section transversale de tracé polygonal.

4. Procédé selon la revendication 3, caractérisé en ce que la surface intérieure (8) présente, avant l'usinage par enlèvement de copeaux, une section transversale d'un polygone régulier, symétrique par rapport à l'axe longitudinal central (4).

5. Procédé selon l'une des revendications 1 à 4, caractérisé en ce qu'entre les retraits (12), sont brochées des surfaces cylindriques partielles (13), disposées en symétrie de révolution par rapport à l'axe longitudinal central (4).

6. Procédé selon l'une des revendications 1 à 5, caractérisé en ce que les retraits (12) sont utilisés en guise de chambres de réserve de graisse de lubrification (14).

7. Procédé selon la revendication 6, caractérisé en ce que les retraits (12) sont fermés à l'une au moins des extrémités de la surface de glissement (13).
